# EUROPEAN PATENT APPLICATION

(11) **EP 1 850 410 A2**
(43) Date of publication of application: **31.10.2007**
(21) Application number: 07008100.5
(22) Date of filing: 20.04.2007
(51) Int. Cl.: H01M 4/64, H01M 2/26, H01M 10/38, H01M 10/40, H01M 4/04, H01M 4/48, H01M 4/50, H01M 4/52, H01M 4/58

(54) **Rechargeable battery fabrication method**

(30) Priority: 29.04.2006 CN 200610079456
(71) Applicant: Exa Energy Technology Co., Ltd., Taichung City 407 (TW)
(72) Inventor: Jan, Yih-Sung, Wunshan District Taipei City 116 (TW); He, Lun-Chieh, Situn District, Taichung City 407 (TW)
(74) Representative: Becker Kurig Straus

(57) **Abstract**

A method of making a rechargeable battery (10) having excellent high current discharge efficiency by preparing a positive pole (20, 70, 80) from an aluminum strip (22), a negative pole (30) from a copper strip (32) and two isolation membranes (40) first. Then cover the positive pole (20, 70, 80) and the negative pole (30) respectively with a positive pole material film (24, 72, 82) and a negative pole material film (34) so that a bare aluminum zone (21) is defined on the positive pole (20, 70, 80) and a bare copper zone (31) is defined on the negative pole (30). Then rolling up the positive pole (20, 70, 80), an isolation membrane (40), the negative pole (30) and the other isolation membrane (40), which are orderly arranged in a stack into a multilayer roll (50) so that the bare aluminum zone (21) and the bare copper zone (31) be respectively positioned at top and bottom sides of the multilayer roll (50). Then weld two conducting poles (26, 36) to the bare aluminum zone (21) and the bare copper zone (31) respectively. Finally, package the multilayer roll (50) in a housing (60) and fill an electrolyte solution (62) in the housing (60).

## Description

### BACKGROUND OF THE INVENTION

### 1. Field of the Invention

The present invention relates to battery and more particularly, to a rechargeable battery fabrication method practical for making a rechargeable battery having excellent high current discharge characteristic.

### 2. Description of the Related Art

Conventional rechargeable batteries include the so-called roll type battery. A roll type battery has a roll construction formed of a positive pole, a first isolation membrane, a negative pole and a second isolation membrane in order. The positive pole has a conducting pole at its end. The negative pole has a conducting pole at its end. The roll construction is packaged in a housing. Thereafter, an electrolyte is filled in the housing, forming the rechargeable battery.

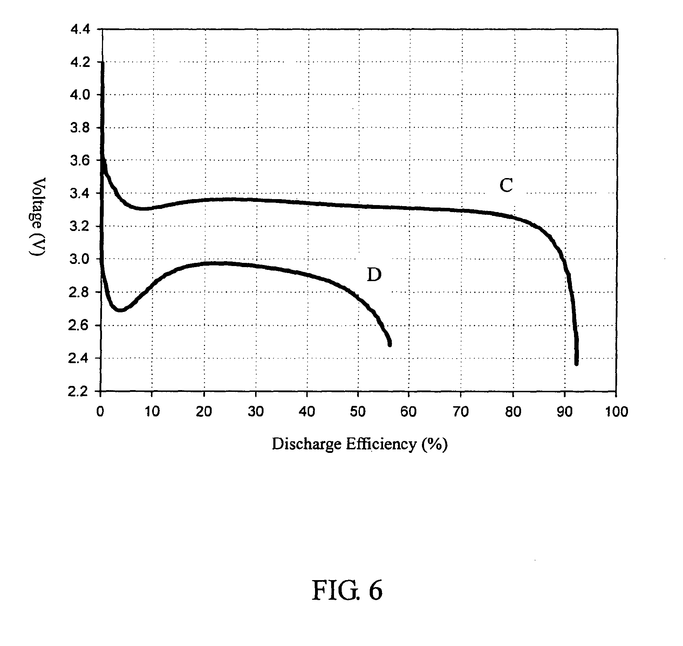

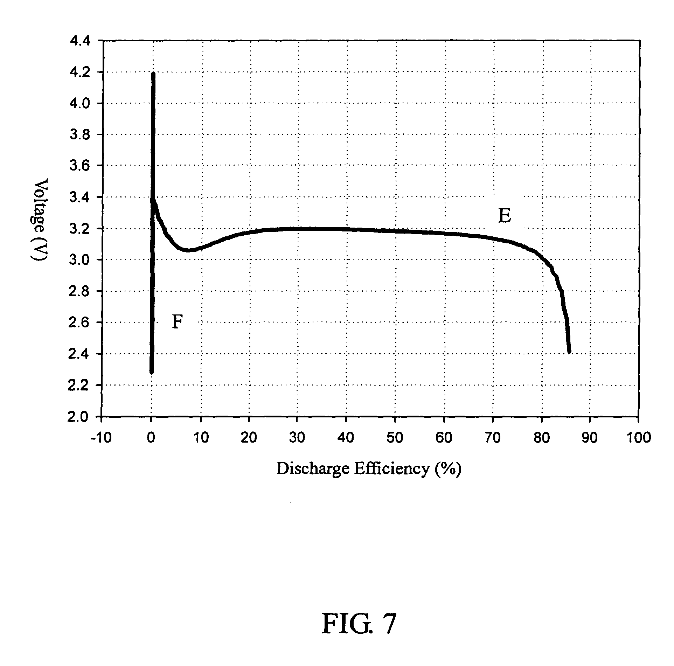

When a conventional rechargeable battery is used for high current discharge, its discharge efficiency is poor. For example, the discharge efficiency of a 2.0 Ah rechargeable battery is about 50% when discharged at 15C (30A) (see line D in FIG. 6), or about zero when discharged at 20C (40A) (see line F in FIG 7). Therefore, how to improve the discharge efficiency of a rechargeable battery during high current discharging has become a research and develop problem in the battery industry.

### SUMMARY OF THE INVENTION

The present invention has been accomplished under the circumstances in view. It is the main object of the present invention to provide a rechargeable battery fabrication method, which is practical for making a rechargeable battery having excellent discharge efficiency during high current discharging.

To achieve this and other objects of the present invention, the rechargeable battery fabrication method comprises the steps of: (a) preparing a positive pole, a negative pole and two isolation membranes; wherein said positive pole includes an elongated aluminum strip and a positive pole material film partially covering said elongated aluminum strip so that a bare aluminum zone is defined on said positive pole; said negative pole includes an elongated copper strip and a negative pole material film partially covering said copper strip so that a bare copper zone is defined on said negative pole; said negative pole material film has a width larger than or equal to a width of said positive pole material film; said two isolation membranes each have a width larger than or equal to the width of said negative pole material film and smaller than both of the width of said aluminum strip and the width of said copper strip; (b) rolling up said positive pole, one of said isolation membranes, said negative pole and the other one of said isolation membranes, which are orderly arranged in a stack, into a multilayer roll to have said positive pole material film of said positive pole and said negative pole material film of said negative pole be overlapped, the bare aluminum zone of said positive pole and the bare copper zone of said negative pole be respectively positioned at top and bottom sides of said multilayer roll, and said two isolation membranes be respectively positioned corresponding to said positive pole material film of said positive pole and said negative pole material film of said negative pole; (c) welding a first conducting pole to said bare aluminum zone of said positive pole of said multilayer roll to electrically connect each layer of said bare aluminum zone, and welding a second conducting pole to said bare copper zone of said negative pole of said multilayer roll to electrically connect each layer of said bare copper zone; and (d) packaging said multilayer roll in a housing in such a manner that said first conducting pole and said second conducting pole extend out of said housing, and then filling an electrolyte solution in said housing.

### BRIEF DESCRIPTION OF THE DRAWINGS

FIG. I is a schematic drawing showing the fabrication of a rechargeable battery in accordance with a first embodiment of the present invention (I).
FIG 2 is a schematic drawing showing the fabrication of a rechargeable battery in accordance with the first embodiment of the present invention (II).
FIG. 3 is a schematic drawing showing the fabrication of a rechargeable battery in accordance with the first embodiment of the present invention (III).
FIG. 4 is a schematic drawing showing the fabrication of a rechargeable battery in accordance with the first embodiment of the present invention (IV).
FIG. 5 is a diagram of 10C discharge efficiency curves according to the present invention and the prior art.
FIG. 6 is a diagram of 15C discharge efficiency curves according to the present invention and the prior art.
FIG 7 is a diagram of 20C discharge efficiency curves according to the present invention and the prior art.
FIG 8 is a front view of a positive pole for a rechargeable battery in accordance with a second embodiment of the present invention.
FIG 9 is a front view of a positive pole for a rechargeable battery in accordance with a third embodiment of the present invention.

### DETAILED DESCRIPTION OF THE INVENTION

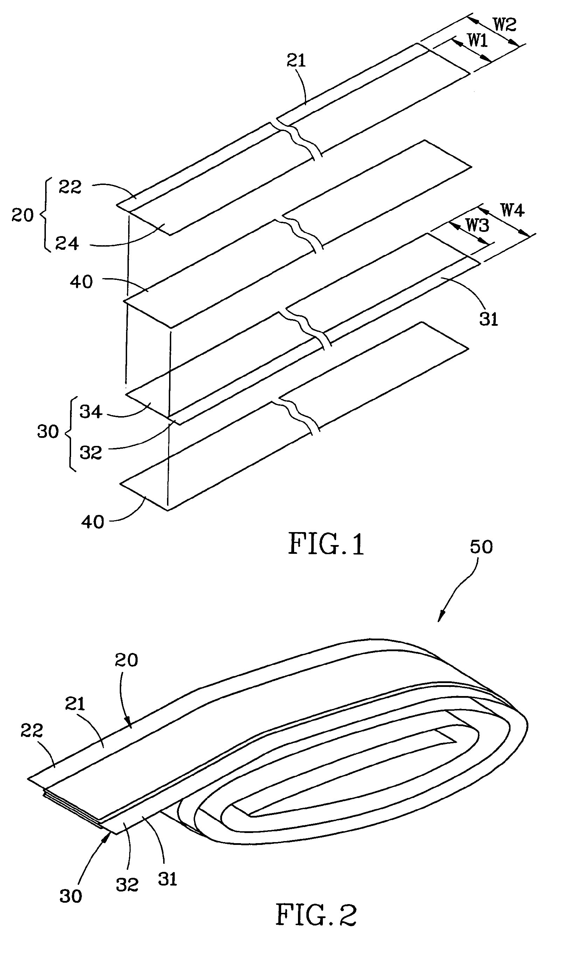

FIGS. 1~4 illustrate the fabrication method of a rechargeable battery **10** in accordance with the first embodiment of the present invention. At first, as shown in FIG. 1, prepare a positive pole **20,** a negative pole **30,** and two isolation membranes **40.** The positive pole **20** comprises a narrow, elongated aluminum strip **22**, and a positive pole material film **24** covered on the two opposite surfaces of the aluminum strip **22.** The positive pole material film **24** is a LiCoO₂ film, having a width **w1** smaller than the width **w2** of the aluminum strip **22** so that the positive pole **20** has a bare aluminum zone **21.** The negative pole **30** comprises a narrow, elongated copper strip **32,** and a negative pole material film **34** covered on the two opposite surfaces of the copper strip **32.** The negative pole material film **34** is a MCMB (Mesophase Carbon Micro Beads) film, having a width **w3** approximately equal to the width **w1** of the positive pole material film **24** and smaller than the width **w4** of the copper strip **32** so that the negative pole **30** has a bare copper zone **31.** The negative pole material film **34** may be made having its width **w3** greater than the width **w1** of the positive pole material film **24.** The isolation membranes **40** are made of polyethylene, having a width **w5** approximately equal to the width **w3** of the negative pole material film **34,** and smaller than both of the width **w2** of the aluminum strip **22** or the width **w4** of the copper strip **32.** The isolation membranes **40** may be made having their width **w5** greater than the width **w3** of the negative pole material film **34.** Further, the positive pole **20,** the negative pole **30** and the two isolation membranes **40** are approximately equal in length.

Alternatively the positive pole material film **24** may be made of any of a variety of other equivalent materials such as lithiated oxide, lithiated sulfide, lithiated selenide, lithiated telluride, lithium-iron-phosphorus oxide, lithium-vanadium-phosphorus oxide of vanadium, titanium, chromium, copper, molybdenum, niobium, iron, nickel, cobalt, manganese or a mixture thereof. Alternatively, the negative pole material film **34** may be made of any of a variety of other equivalent materials such as Mesophase Carbon Micro Beads (MCMB), Vapor-Grown Carbon Fiber (VGCF), Carbon Nanotube (CNT), coke, carbon black, graphite, acetylene black, carbon fiber, vitreous carbon or a mixture thereof. Alternatively, the isolation membranes **40** may be made of polypropylene or polyether.

Thereafter, as shown in FIG 2, roll up the positive pole **20,** one of the isolation membranes **40,** the negative pole **30** and the other on of the isolation membranes **40,** which are orderly arranged in a stack, into a multilayer roll **50** to have said positive pole material film **24** of said positive pole **20** and said negative pole material film **34** of said negative pole **30** be overlapped. The bare aluminum zone **21** of the positive pole **20** and the bare copper zone **31** of the negative pole **30** are respectively positioned at two opposite (top and bottom) sides of said multilayer roll **50.** The two isolation membranes **40** are respectively positioned corresponding to the positive pole material film **24** of the positive pole **20** and the negative pole material film **34** of the negative pole **30** to isolate the positive pole material film **24** from the negative pole material film **34.** Alternatively, the sequence of the layers in the multilayer roll **50** can be so arranged with one isolation membrane **40,** the positive pole **20,** the other one of the isolation membranes **40** and the negative pole **30.**

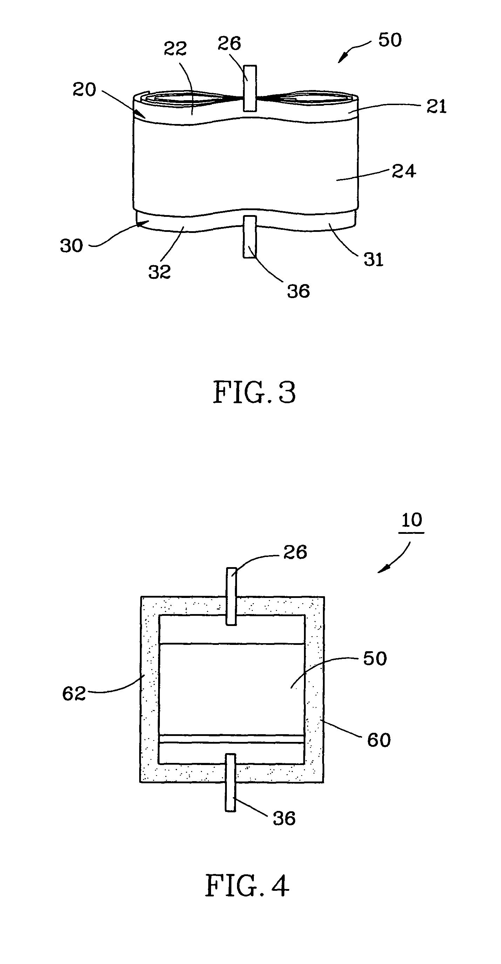

Thereafter, as shown in FIG 3, weld a first conducting pole **26** to the bare aluminum zone **21** of the positive pole **20** of the multilayer roll **50** to electrically connect each layer of the bare aluminum zone **21** of the positive pole **20,** and weld a second conducting pole **36** to the bare copper zone **31** of the negative pole **30** of the multilayer roll **50** to electrically connect each layer of the bare copper zone **31** of the negative pole **30.**

At final, as shown in FIG. 4, package the multilayer roll **50** in a housing **60,** and then fill an electrolyte solution **62** in the housing **60.** After sealing of the housing **60,** the desired rechargeable battery is thus obtained, and the first conducting pole 26 and the second conducting pole **36** extend out of the housing **60.** According to this embodiment, the electrolyte solution **62** is 1.5M LiPF₆ (lithium hexafluorophosphate). Alternatively, LiBF₄, LiAsF₆, LiSbF₆, LiClO₄, LiAlCl₄, LiGaCl₄, LiNO₃, LiC(SO₂CF₃)₃, LiN(SO₂CF₃)₂, LiSCN, LiO₃SCF₂CF₃, LiC₆F₅SO₃, LiO₂CCF₃, LiSO₃F, LiB(C₆H₅)₄, LiCF₃SO₃, LiB(C₂O₄)₂, or a mixture thereof can be adopted as electrolyte solution **62.** The concentration of the electrolyte in the electrolyte solution **62** can be 1.1~2.0M. The solvent for the electrolyte solution **62** is comprised by volume of 30% ethylene carbonates, 20% propylene carbonates, and 50% propyl acetate. Actually, the solvent can be prepared from ethylene carbonates, propylene carbonates, butylene carbonates, dipropyl carbonates, acid anhydrides, n-methyl pyrrolidone, n-methyl acetamide, n-methyl formamide, dimethyl formamide, r -butyrolactone, acetonitrile, dimethyl sulfoxide, dimethyl sulfite, vinylene carbonate (VC), 1,2-diethoxyethane, 1,2-dimethoxyethane, 1,2-dibutoxyethane, tetrahydrofuran, 2-methyl tetrahydrofuran, propylene oxide, methyl acetate, ethyl acetate, propyl acetate, methyl butyrate, ethyl butyrate, methyl propionate, ethyl propionate, dimethyl carbonate (DMC), diethyl carbonate (DEC), ethyl methyl carbonate (EMC), or a mixture thereof.

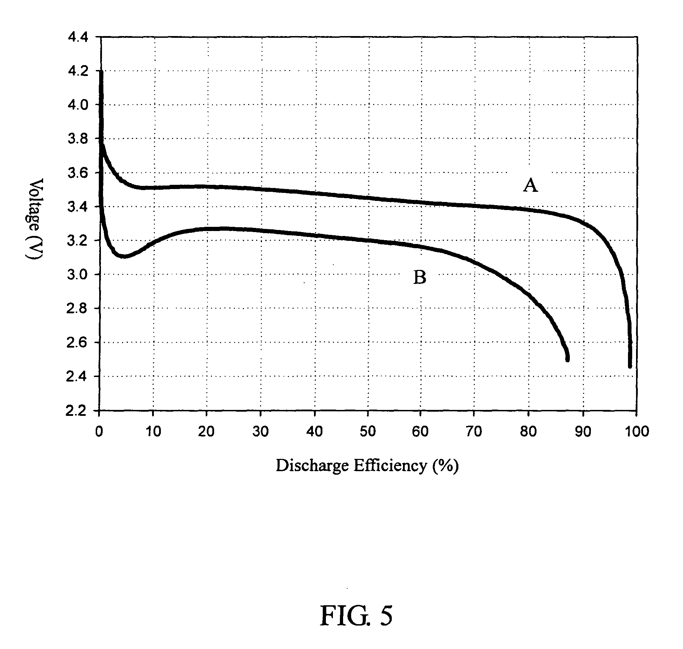

Because the first conducting pole **26** of the positive pole **20** is electrically connected to each layer of the bare aluminum zone **21** and the second conducting pole **36** of the negative pole **30** is electrically connected to each layer of the bare copper zone **31,** the moving distance of electrons in both of the positive pole **20** and the negative pole **30** is greatly reduced during discharging of the rechargeable battery **10.** The average moving distance is about 2cm. In a conventional roll type battery, the average moving distance of electrons is about 20cm. Therefore, the rechargeable battery **10** of the present invention has excellent high current discharge efficiency. When compared with a conventional roll type battery, as shown in FIG. 5, the discharge voltage of the rechargeable battery **10** according to the present invention is maintained at about 3.4~3.5V when discharging at 10C (see line A) and the discharge voltage of a conventional roll type battery at 10C is maintained at about 3.2V (see line B). The discharge efficiency of the rechargeable battery **10** of the present invention is over 90%, obviously superior to the prior art. As shown in FIG. 6, the discharge voltage of the rechargeable battery **10** according to the present invention is maintained at about 3.3 V when discharging at 15C (see line C) and the discharge voltage of a conventional roll type battery at 15C is maintained below 3V (see line D). The discharge efficiency of the rechargeable battery **10** of the present invention is about 90%, which is obviously superior to the discharge efficiency of the prior art (about 50%). As shown in FIG 7, the discharge voltage of the rechargeable battery **10** according to the present invention is maintained at about 3.2V when discharging at 20C (see line E) and the discharge efficiency of the rechargeable battery **10** of the present invention is about 80%. A conventional roll type battery cannot discharge under the same situation (see line F).

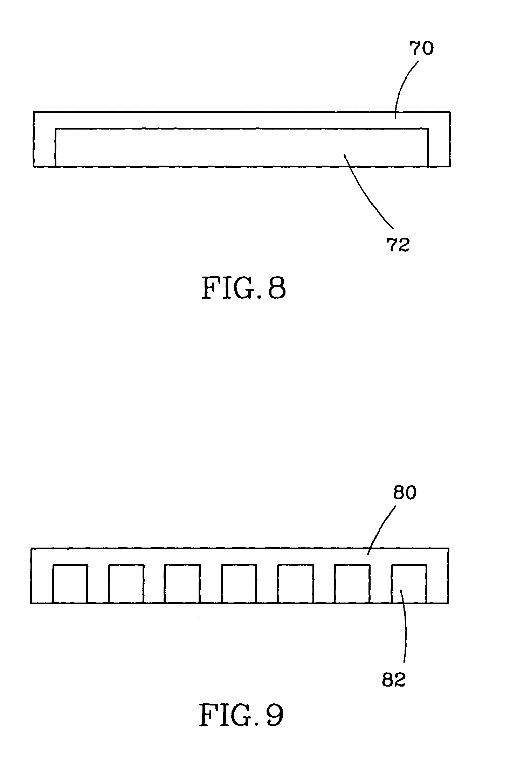

Based on the spirit and scope of the invention, the positive pole material film can simply be coated on one of the two surfaces of the aluminum strip. Similarly, the negative pole material film can simply be coated on one of the two surfaces of the copper strip provided that the negative pole material film faces the positive pole material film. Further, the positive pole material film and the negative pole material film may be respectively coated on the aluminum strip and the copper strip to show any of a variety of patterns. FIG. 8 is a front view of a positive pole **70** for a rechargeable battery in accordance with the second embodiment of the present invention. According to this second embodiment, the positive pole material film **72** extends along one long side of the positive pole **70,** having its two ends spaced from the two opposite short sides of the positive pole **70** at a distance. FIG. 9 is a front view of a positive pole **80** for a rechargeable battery in accordance with the third embodiment of the present invention. According to this third embodiment, the positive pole material film **82** shows a parallel pattern.

Although particular embodiments of the invention have been described in detail for purposes of illustration, various modifications and enhancements may be made without departing from the spirit and scope of the invention. Accordingly, the invention is not to be limited except as by the appended claims.

## Claims

1. A rechargeable battery fabrication method, which is **characterized in that** the method comprises the steps of:
(a) preparing a positive pole (20, 70, 80), a negative pole (30) and two isolation membranes(40);
wherein said positive pole (20, 70, 80) includes an elongated aluminum strip (22) and a positive pole material film (24, 72, 82) partially covering said elongated aluminum strip (22) so that a bare aluminum zone (21) is defined on said positive pole (20, 70, 80); said negative pole (30) includes an elongated copper strip (32) and a negative pole material film (34) partially covering said copper strip (32) so that a bare copper zone (31) is defined on said negative pole (30); said negative pole material film (34) has a width (w3) larger than or equal to a width (w1) of said positive pole material film (24, 72, 82); said two isolation membranes (40) each have a width (w5) larger than or equal to the width (w3) of said negative pole material film (34) and smaller than both of the width (w2) of said aluminum strip (22) and the width (w4) of said copper strip (32);
(b) rolling up said positive pole (20, 70, 80), one of said isolation membranes (40), said negative pole (30) and the other one of said isolation membranes (40), which are orderly arranged in a stack, into a multilayer roll (50) to have said positive pole material film (24, 72, 82) of said positive pole (20, 70, 80) and said negative pole material film (34) of said negative pole (30) be overlapped, the bare aluminum zone (21) of said positive pole (20, 70, 80) and the bare copper zone (31) of said negative pole (30) be respectively positioned at top and bottom sides of said multilayer roll (50), and said two isolation membranes (40) be respectively positioned corresponding to said positive pole material film (24, 72, 82) of said positive pole (20, 70, 80) and said negative pole material film (34) of said negative pole (30);
(c) welding a first conducting pole (26) to said bare aluminum zone (21) of said positive pole (20, 70, 80) of said multilayer roll (50) to electrically connect each layer of said bare aluminum zone (21), and welding a second conducting pole (36) to said bare copper zone (31) of said negative pole (30) of said multilayer roll (50) to electrically connect each layer of said bare copper zone (31); and
(d) packaging said multilayer roll (50) in a housing (60) in such a manner that said first conducting pole (26) and said second conducting pole (36) extend out of said housing (60), and then filling an electrolyte solution (62) in said housing (60).

2. The rechargeable battery fabrication method as claimed in claim 1, which is **characterized in that** said positive pole material film (24, 72, 82) is made of one or more materials selected from the group consisting of lithiated oxide, lithiated sulfide, lithiated selenide, lithiated telluride, lithium-iron-phosphorus oxide, lithium-vanadium-phosphorus oxide of vanadium, titanium, chromium, copper, molybdenum, niobium, iron, nickel, cobalt or manganese, and a mixture thereof.

3. The rechargeable battery fabrication method as claimed in claim 1, which is **characterized in that** said negative pole material film (34) is made of one or more materials selected from the group consisting of mesophase carbon micro beads, vapor-grown carbon fiber, carbon nanotube, coke, carbon black, graphite, acetylene black, carbon fiber, vitreous carbon, and a mixture thereof.

4. The rechargeable battery fabrication method as claimed in claim 1, which is **characterized in that** said electrolyte solution (62) comprises an electrolyte selected from the group consisting of LiPF₆, LiBF₄, LiAsF₆, LiSbF₆, LiClO₄, LiAlCl₄, LiGaCl₄, LiNO₃, LiC(SO₂CF₃)₃, LiN(SO₂CF₃)₂, LiSCN, LiO₃SCF₂CF₃, LiC₆F₅SO₃, LiO₂CCF₃, LiSO₃F, LiB(C₆H₅)₄, LiCF₃SO₃, LiB(C₂O₄)₂, and a mixture thereof.

5. The rechargeable battery fabrication method as claimed in claim 1, which is **characterized in that** said electrolyte solution (62) comprises a solvent selected from the group consisting of ethylene carbonates, propylene carbonates, butylene carbonates, dipropyl carbonates, acid anhydrides, n-methyl pyrrolidone, n-methyl acetamide, n-methyl formamide, dimethyl formamide, r -butyrolactone, acetonitrile, dimethyl sulfoxide, dimethyl sulfite, vinylene carbonate, 1,2-diethoxyethane, 1,2-dimethoxyethane, 1,2-dibutoxyethane, tetrahydrofuran, 2-methyl tetrahydrofuran, propylene oxide, methyl acetate, ethyl acetate, propyl acetate, methyl butyrate, ethyl butyrate, methyl propionate, ethyl propionate, dimethyl carbonate, diethyl carbonate, ethyl methyl carbonate, and a mixture thereof.
